(19) **Europäisches Patentamt / European Patent Office / Office européen des brevets**

(11) **EP 2 101 995 B1**

(12) **EUROPEAN PATENT SPECIFICATION**

(45) Date of publication and mention
of the grant of the patent:
**17.08.2011 Bulletin 2011/33**

(51) Int Cl.:
*B32B 15/08* *(2006.01)*  *B32B 27/32* *(2006.01)*
*B32B 27/34* *(2006.01)*  *B32B 27/36* *(2006.01)*

(21) Application number: **07866319.2**

(22) Date of filing: **27.12.2007**

(86) International application number:
**PCT/EP2007/064572**

(87) International publication number:
**WO 2008/080941 (10.07.2008 Gazette 2008/28)**

(54) **PROCESS FOR PRODUCING A COATED METAL SUBSTRATE, A COATED METAL SUBSTRATE AND PACKAGING PRODUCED THEREOF**

VERFAHREN ZUR HERSTELLUNG EINES BESCHICHTETEN METALLSUBSTRATS, EIN BESCHICHTETES METALLSUBSTRAT UND DARAUS HERGESTELLTE VERPACKUNG

PROCÉDÉ DE FABRICATION D'UN SUBSTRAT MÉTALLIQUE REVÊTU, SUBSTRAT MÉTALLIQUE REVÊTU ET CONDITIONNEMENT PRODUIT APPARENTÉ

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **05.01.2007 EP 07000167**

(43) Date of publication of application:
**23.09.2009 Bulletin 2009/39**

(73) Proprietor: **Tata Steel IJmuiden BV
1970 CA IJmuiden (NL)**

(72) Inventor: **JELENIC, Jernej
NL-7433 CA Schalkhaar (NL)**

(74) Representative: **Bodin, Andre et al
Tata Steel
Group Intellectual Property Services
P.O. Box 10000
1970 CA IJmuiden (NL)**

(56) References cited:
**US-A- 3 644 571**   **US-A- 4 916 198**
**US-A- 5 736 086**   **US-A- 6 143 825**
**US-A1- 2001 009 718**   **US-A1- 2004 254 332**

- **DATABASE WPI Week 200332 Derwent Publications Ltd., London, GB; AN 2003-336167 XP002473926 & JP 2002 331578 A (OKURA IND CO LTD) 19 November 2002 (2002-11-19)**
- **DATABASE WPI Week 200448 Derwent Publications Ltd., London, GB; AN 2004-501582 XP002473927 & JP 2004 155176 A (C & S KK) 3 June 2004 (2004-06-03)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention relates to a process for producing a coated metal substrate, to a coated metal substrate and a packaging produced from said coated metal substrate.

Conventional polymer coated metal substrates for use in packaging applications, such as a deep-drawn or wall-ironed beverage can, have the disadvantage that the macromolecules in the polymer layer become aligned as a result of the drawing or wall-ironing operation. This alignment increases the degree of crystallinity of the polymer. The orientation and higher degree of crystallinity of the polymer causes the polymer layer to be more susceptible to stress cracking or a reduced impact resistance, due to the severe anisotropy of the mechanical properties.

It is an object of this invention to provide a polymer coated metal substrate with an increased stress cracking resistance.

It is also an object of this invention to provide a polymer coated metal substrate with an increased impact resistance.

It is also an object of this invention to provide a method for producing a polymer film suitable for direct lamination.

It is also an object of this invention to provide a method for producing a metal substrate coated with an increased stress cracking resistance and/or an increased impact resistance.

It is also an object of this invention to provide a method for producing a polymer film for directly laminating onto a metal substrate at a higher speed or for producing a polymer film at a higher speed for laminating onto a metal substrate.

One or more of these objects are achieved by a process for producing a polymer-coated low carbon steel substrate having a thickness of between 0.10 and 0.30 mm and a carbon content of between 0.002 and 0.1% for producing cans or containers comprising the steps of

    o providing the steel substrate;
    o providing a polymer film by extrusion to form an extrudate;
    o bringing the film into suitable dimensions for lamination;
    o optionally providing an adhesion layer for improving the adhesion between the film and the metal substrate
    o laminating the film onto the metal substrate;
    o wherein the film comprises:

    - at least one long-chain branched (LCB) polymer layer consisting of long-chain branched -polyethylene terephthalate or copolymers thereof, or
    - at least one polymer layer consisting of

    - a blend of long-chain branched -polyethylene terephthalate or copolymers thereof, and
    - a polyester of the linear type, or a polyolefin, such as polyethylene or polypropylene or copolymers thereof, or polyethylene terephthalate, polybutylene terephthalate or copolymers thereof.

    o wherein the long-chain branched -polymer layer or the polymer layer has a value of the shear thinning effect $\eta^*_{0,1}/\eta^*_{10}$ of at least 3.0 at a temperature of between 270 to 290°C.

With the process according to the invention a polymercoated metal substrate is obtained wherein at least one polymer layer is a polymer layer comprising or consisting of a polymer of the long-chain branched type (LCB-type). Throughout this specification, the term "LCB-polymer layer" will be understood to imply a polymer layer comprising or consisting of a polymer of the long-chain branched type. In the process according to the invention the film comprises at least one LCB-polymer layer comprising or consisting of (LCB-polyethylene terephthalate or copolymers thereof. Throughout this specification, the term "comprising" or variations thereof will be understood to imply the inclusion of a stated element or step, but not the exclusion of any other element or step. Also throughout this specification, the term "consisting" or variations thereof will be understood to be restricted to the polymer components only. By means of example, a polymer layer comprising polymer-type A may also contain polymer type B. A polymer layer consisting of polymer-type A will only contain polymers of polymer type A. Along with polymer type A minor additions such as colorants, reagents, oxidation inhibiting additions, chemical modifiers etc may be present, as well as unavoidable elements or components, but no other polymer types in an avoidable amount. The adhesion of the at least one LCB-polymer layer may be achieved by lamination of the film onto the substrate wherein the substrate is brought to such a temperature that the polymer film melts upon contact with the substrate, or is at least partly molten prior to contacting the substrate, and can be laminated upon the substrate, for instance using a pair of laminator rolls. The optional adhesion layer is preferably a layer of amorphous polymer such as amorphous polyethylene terephthalate (PET), a modified PET, a PET based resin or a modified polyolefin resin having a functional group derived from carboxylic acid as mentioned in EP 1 449 884 A1, particularly paragraph [0044]. This optional adhesion layer may provide additional adhesion of the at least one LCB-polymer layer to the metal substrate. The optional adhesion layer may be provided by coextrusion, or by a separate application step either on the film or on the metal substrate. In its simplest form the substrate may therefore be coated with a single LCB-polymer layer. However, the substrate may be coated with a polymer coating system comprising said single LCB-polymer layer, in which case one or a plurality of additional polymer layers are provided. The additional polymer layer or layers may be provided, for instance as a top coat, immediately on top of said single LCB-polymer layer or on top of an intermediate layer or layers on top of said single LCB-polymer layer, or between the single LCB-polymer layer and the metal substrate. As an example, the metal substrate may be coated with said single LCB-layer and an adhesion layer between the LCB-polymer layer and the substrate.

Chemical modification can produce various features in PET which provides a polymer having different properties as compared with the unmodified PET. Among these chemical modifiers are branching agents such as trimethylolpropane (TMP), trimesic agents, such as trimesic acid, or tetrafunctional pentaerythritol. The incorporation of small amounts of a branching agent leads to the formation of long-chain branches.

The effect of the long chain branching is that a lower degree of orientation and lower degree of crystallinity of the polymer is achieved after deep-drawing and/or wall-ironing the metal substrate into a cup or a container. It is believed that this is caused by the macromolecules having a significantly lower tendency to align themselves. The higher melt strength of an LCB-polymer in comparison to the linear polymer of the same type makes the polymer suitable for blow-forming.

The lower degree of orientation in the polymer layer will also result in a better homogeneity of the properties of the polymer layer. The lower degree of orientation manifests itself in the better stress cracking resistance which is of importance for instance in producing shaped cans where an elongation of the can wall perpendicular to the drawing and/or ironing direction may be necessary.

For the same molecular weight, a LCB-molecule has a smaller mean coil size, radius of gyration than the linear macromolecules of the same polymer. This results in a lower viscosity of a LCB-polymer melt compared to a melt of linear molecules, thereby making it extremely suitable for direct extrusion.

The polymer coil size can be derived from viscosity measurements in solution or melt as well as from size exclusion chromatography or light scattering experiments.

As a quantitative measure for the characterization of branched polymers, the index of branching, g, has been introduced. It is defined as the ratio of the radii of gyration of branched and linear polymers:

$$g = <s^2>_{branched} / <s^2>_{linear}$$

Other more easily accessible quantities are the corresponding ratios of intrinsic viscosities determined from the polymer solution viscosity

$$g' = [\eta]_{branched} / [\eta]_{linear}$$

or melt viscosities determined from the polymer melt viscosity extrapolated to zero shear ($\eta^*o$).

$$g^* = \eta^*_{o,branched} / \eta^*_{o,linear}$$

LCB-polymers have a higher $\eta_o$ at low shear rate and a lower viscosity at higher shear rate in comparison to the equivalent linear polymers of the same molecular weight. This is due to the enhanced polymer-polymer interaction of branched polymers at low shear rate and higher alignments (lower viscosity) at higher shear rate. LCB-polymers have a stronger shear-thinning effect than the linear polymers of same molecular weight.

For PET at commonly recommended processing temperature (270 - 290°C) this shear thinning effect, $\eta^*_{0.1} / \eta^*_{10}$ is for linear PET, measured at shear rate 0.1 (1/s) and at 10 (1/s), up to 2.0. For the branched PET with LCB this ratio is preferably at most 10 but more preferably between 3.0 - 6.0. The complex viscosity, $\eta^*$ [Pa: s], is measured on an Anton Paar MCR301 oscillating rheometer using a parallel plates geometry (plate radius = 20mm). Therefore a measure for the degree of long-chain branching of a branched polymer is the shear thinning effect, $\eta^*_{0.1} / \eta^*_{10}$. The minimum value of this ratio is 3.0. A suitable value is at most 10, preferably at most 8. More preferably the ratio is between 3.0 and 6.0. Preferably, the ratio of the LCB-polymer is at least 1.5 times and preferably at least twice the value of the corresponding linear polymer.

Another possibility to measure the degree of long-chain branching is to measure the extensional (or elongational) melt viscosity. This is an important polymer melt property in fiber spinning, blow molding, film blowing and thermoforming processing.

The elongational viscosity, $\eta_e$, can be measured with a Rheotens melt strength rheometer ex, Gottfert which determines the melt strength, e.g. the force (maximum tension) that can be applied to the molten material without causing rupture. The typical melt tension values for branched polymers are above 5 cN at drawing speed of 200mm/s. The linear polymers have a melt tension value below this value. This means that the strength of the melt is higher for LCB-polymers in comparison to the equivalent linear polymers of the same molecular weight. That is why LCB-polymers are sometimes called high melt strength polymers.

In an embodiment of the invention the extrudate is stretched after extrusion and prior to the lamination step. The higher melt strength film of the LCB-polymer layer enables stretching the material with a lower risk of rupture in comparison to the same film produced without the polymer of the LCB-type but with the equivalent linear polymers. The stretching operation may be uniaxial or biaxial stretching after the extrusion of the extrudate in the form of a film through a die such as a T-die, or blow-forming after the extrusion of the extrudate in the form of a tube.

In an embodiment the process for producing a polymer film for laminating onto a metal substrate comprises the steps of providing a melt comprising or consisting of an LCB-polymer, extruding said melt into a tube, stretching the tube into a film by blow-forming said polymer tube into a tubular polymer film, followed by bringing said tubular film into suitable dimensions for lamination, for instance by slitting and cutting operations. These films may be coiled for later lamination, or the film may be laminated without intermediate coiling and uncoiling of the film. It will be clear that the tubular form is the most symmetric form, but alternative closed shapes such as rectangles or polygonal shapes may also be extruded and blow-formed.

In an embodiment of the invention the said one LCB-polymer layer has a melt tension value of at least 5 cN at a drawing speed of 200 mm/s. A suitable maximum value for the melt tension value is 20 cN, and more preferably 15 cN. Preferably the melt tension value is at least 6 cN. In an embodiment the melt tension value of the LCB-polymer layer is between 6 and 14 cN.

The stretched film can be laminated substantially immediately after blowing and/or cutting, but it may also be coiled after stretching and/or cutting and laminated after uncoiling at a later time. The metal strip and/or the side of the film to be adhering to the metal substrate, or to an adhesion layer on the metal substrate if present, may be preheated so as to provide good adherence of the film to the metal substrate or the adhesion layer.

The coating may be applied on one or both sides of the metal substrate, which is usually a strip, either consecutively or, preferably, simultaneously.

In the invention, the at least one LCB-polymer layer comprises or consists of LCB-polyethylene terephthalate or copolymers thereof. It was found that a coating system comprising such an LCB-polymer layer provides a metal substrate with a coating layer having an increased stress cracking resistance and/or an increased impact resistance.

In an embodiment of the invention, a process is provided for producing a polymer film for laminating onto a metal substrate comprising the steps of

- providing a melt comprising or consisting of LCB-PET or copolymers thereof;
- extruding said melt to form a film comprising at least one LCB-polymer layer, for - instance through a T-die,
- optionally providing an adhesion layer for providing improved adhesion between the metal substrate and the film to be laminated thereupon.
- directly laminating said film onto the metal substrate or onto the adhesion layer, if present;
- optionally pressing said directly laminated film onto the metal substrate and/or the adhesion layer to improve the adhesion of the directly laminated film to the metal substrate and/or the surface quality of the film.

For the same molecular weight, a LCB-polymer molecule has a smaller mean coil size, radius of gyration than the linear macromolecules of the same polymer. This results in a lower viscosity of a LCB-polymer melt compared to a melt of linear molecules, thereby making it extremely suitable for direct extrusion. The film may be stretched, preferably biaxially stretched, between the extrusion of the film and the lamination of the film onto the substrate. The amount of stretching is preferably at least 2 times. A suitable maximum amount of stretching is 10 times, and preferably 6 times. More preferably, the amount of stretching is between 2 and 5 times.

It is believed that the LCB-polymer coated materials allow a significantly increased line speed during production of the cups or containers compared to linear polymer coated materials.

It is also believed that the LCB-polymer coated materials allow a significantly increased line speed and reduced necking during extrusion coating compared to linear polymer.

The LCB-molecules have a unique rheological behaviour by combining an increased melt strength with a significantly improved melt elongation. The branched polymer structure combines an increased melt strength with largely improved drawability of the polymer melt. This makes the LCB-polymer especially suitable for extrusion processes and particularly for extrusion coating.

The LCB-PET coated materials allow a significantly increased line speed and still achieve similar or improved properties of the coating and the coated substrate and reduced necking compared to conventional linear PET.

According to the present invention, a method of producing an extrusion-laminated metal substrate is provided by extruding a polymer resin comprising or consisting of LCB-polymers from a die, for instance a T-die, into the form of a film, optionally followed by stretching the extruded film, and laminating the film comprising at least one LCB-polymer layer on a metallic base member using laminating rolls wherein the film is supported by the laminating rolls on the side opposite to the side that adheres onto the metal substrate or the adhesion layer (if present) and is fed to a nipping position so as to be melt-adhered onto the metal substrate or the adhesion layer. The metal may be preheated prior to melt-adhering, and/or the film may be above the melting point on the side that adheres onto the metal substrate or the adhesion layer blank. One or more rolls may be disposed between the die and the laminating roll to convey the film from the die to the laminating rolls. The lamination may be performed on one side of the metal substrate only, or on both sides at the same time, or consecutively. EP 1 095 767 and US 5,407,702 show different ways to extrude and laminate a film onto a strip using one or more rolls between the die and the laminating rolls. The use of the polymer resin comprising or consisting of one or more LCB-polymers in the extruded film which is to be laminated results in a higher melt-strength of the film, and thus allows a higher extrusion, stretching and laminating speed.

In an embodiment of the invention a metal substrate is provided with a coating system, said coating system comprising at least one layer of a polymer wherein said one polymer layer consists of a blend of a first blending component and a second blending component, wherein the first blending component consists of LCB-polyethylene terephthalate or copolymers thereof, and wherein the second blending component essentially consists of a polyester of the linear type, a polyolefin, such as polyethylene or polypropylene or copolymers thereof, or polyethylene terephthalate, polybutylene terephthalate or copolymers thereof. These particular blends offer the opportunity to change or adapt the properties of the resulting coating system.

The metal substrate may be a surface treated strip or sheet of steel For a steel substrate it is important that the forming operation into the desired product such as a container can be practiced. Cold rolled and annealed low carbon steel, extra low carbon steel or ultra low carbon steel with a carbon content of between 0.002 and 0.1% having a thickness of between 0.10 to 0.30 mm is used. In order to produce good adhesion of the polymer coating to the steel surface, it is common to use an ECCS or TFS (Tin Free Steel) steel substrate. However, it should be noted that the application of the invention is not limited to the aforementioned substrates.

According to a second aspect of the invention a metal substrate is provided with a polymer coating, said coating system comprising or consisting of at least an extruded LCB-polymer layer comprising or consisting of LCB-polyethylene terephthalate or copolymers thereof.

An embodiment of the invention is a metal substrate provided with a multi-layer coating system, said coating system comprising two or more polymer layers, wherein at least one polymer layer is an LCB-polymer layer wherein said LCB-polymer is LCB-polyethylene terephthalate or copolymers thereof. In this embodiment, the metal substrate is provided with a polymer coating in accordance with the invention and at least one further LCB-polymer layer, preferably selected from the group of LCB-polymer layers comprising LCB-polyethylene terephthalate or copolymers thereof, LCB-polypropylene or copolymers thereof, LCB-polyamide or copolymers thereof, or LCB-polyethylene or copolymers thereof;

An embodiment of the invention is a metal substrate provided with a multi-layer coating system, said coating system comprising two or more polymer layers and an optional adhesion layer, wherein at least one of said polymer layers is an LCB-polymer layer, wherein said LCB-potymer is LCB-polyethylene terephthalate or copolymers thereof, the coating system optionally comprising an adhesion layer between the LCB-polymer layer and the metal substrate so as to improve the adhesion, the coating system optionally comprising a top layer either provided immediately on top of the at least one LCB-polymer layer, or provided as the outer layer of the multi-layer coating system, i.e. the layer of the coating system located furthest away from the metal substrate. This top layer is preferably a crystallisable polyethylene terephthalate and/or isophthalic acid copolymerised PET or a polyolefin coatings such as a crystallisable polyethylene or polypropylene.

According to a third aspect of the invention a packaging is provided, such as a can or container, having an inside surface for touching a packaged product, such as, but not limited to, a food product for human or animal consumption, or a beverage, and an outside surface, wherein the packaging is produced from a metal substrate according to the invention, such that a coating is provided comprising or consisting of an LCB-polymer layer according to the invention is provided, at least partly, onto the inside surface, or onto the outside surface, or onto the inside surface and the outside surface.

The packaging according to the invention provides an improved resistance against stress cracking and/or impact resistance, and it may also be produced at a higher speed during deep drawing and/or wall ironing.

In an embodiment of the invention a shaped can or container is provided. A shaped can is defined as a can which, after having been formed into a can, for instance (but not limited to) a cylindrical can, is shaped in an additional shaping step into a substantially non cylindrical form, such as a beer glass shape, a barrel shape, and/or wherein the can is provided with embossing, etc to provide a can with an attractive or eye-catching appearance. Shaping a packaging such as a can is often performed by locally increasing the internal diameter of the drawn and/or wall-ironed can. The improved resistance against stress cracking and/or impact resistance, results in a better performance of the coating during and after shaping. This is believed to be mainly caused by the smaller degree of orientation and crystallinity of the LCB-polymer layer. It is noted that the cans may have a non-cylindrical form prior to shaping, for instance a square form like Le Carré®, and that these substantially non-cylindrical cans may also be subjected to a shaping step. It is noted that, although a packaging may be provided with beads to increase the stiffness of the packaging, particularly in three piece cans, these beaded cans are not to be interpreted as shaped cans.

According to a fourth aspect of the invention, a film for laminating onto a metal substrate is provided wherein the film comprises one or more polymer layers, and wherein at least one of said one or more polymer layers is an LCB-polymer layer, wherein the LCB-polymers are LCB-polyethylene terephthalate or copolymers thereof. The film may be produced by extrusion of a melt comprising or consisting of an LCB-polymer. The film may be stretched, preferably biaxially stretched, between the extrusion of the film and the lamination of the film onto the substrate. The amount of stretching is preferably at least 2 times. A suitable maximum amount of stretching is 10 times, and preferably 6 times. More preferably, the amount of stretching is between 2 and 5 times. Preferably, the film is produced by blow-forming after extrusion of a suitably shaped extrudate, such as a tube.

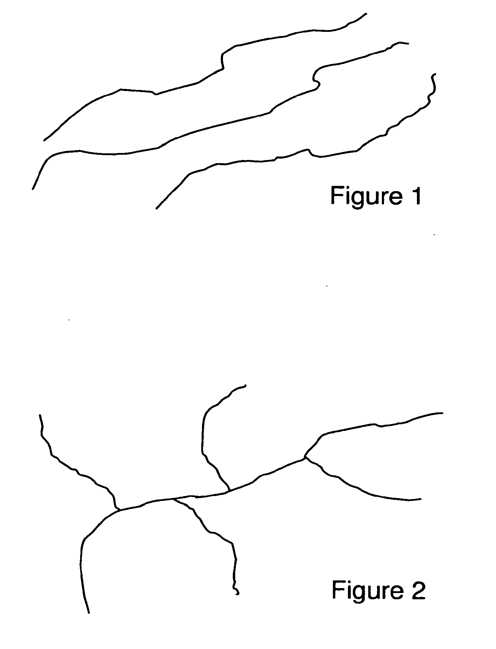

In the accompanying figure, the difference between a linear polymer (figure 1) and a long-chain branched polymer (figure 2) is schematically illustrated.

## Claims

1. Process for producing a polymer-coated low carbon steel substrate having a thickness of between 0.10 and 0.30 mm and a carbon content of between 0.002 and 0.1 % for producing cans or containers comprising the steps of

> o providing the steel substrate;
> o providing a polymer film by extrusion to form an extrudate;
> o bringing the film into suitable dimensions for lamination;
> o optionally providing an adhesion layer for improving the adhesion between the film and the metal substrate
> o laminating the film onto the metal substrate;
> o wherein the film comprises:
>
> > - at least one long-chain branched (LCB) polymer layer consisting of long-chain branched polyethylene terephthalate or copolymers thereof, or
> > - at least one polymer layer consisting of a blend of
> >
> > > - long-chain branched polyethylene terephthalate or copolymers thereof, and
> > > - a polyester of the linear type, or a polyolefin, such as polyethylene or polypropylene or copolymers thereof, or polyethylene terephthalate, polybutylene terephthalate or copolymers thereof.
>
> o wherein the long-chain branched polymer layer or the polymer layer has a value of the shear thinning effect $\eta^*_{0.1} / \eta^*1_0$ of at least 3.0 at a processing temperature of between 270 to 290°C.

2. Process according to claim 1 wherein the extrudate is stretched prior to the lamination step, wherein the amount of stretching between the extrusion of the polymer film and the lamination of the polymer film is at least 2 times and/or at most 10 times.

3. Process according to any one of the preceding claims wherein the long-chain branched polymer layer has a value of the shear thinning effect $\eta^*_{0.1} / \eta^*_{10}$ of at most 10 at a processing temperature of between 270 to 290°C.

4. Process according to any one of the preceding claims wherein the long-chain branched polymer layer has a value of the shear thinning effect $\eta^*_{0.1} / \eta^*_{10}$ of at most 6.0 at a processing temperature of between 270 to 290°C.

5. Process according to any one of the preceding claims wherein the long-chain branched polymer layer has a melt tension value of at least 5 cN at a drawing speed of 200 mm/s.

6. Process according to any one of the preceding claims wherein the long-chain branched polymer layer is one of the layers of a multi-layer coating system.

7. Process according to any one of the preceding claims wherein at least an adhesion layer is present between the long-chain branched polymer layer and the metal substrate, or wherein at least a top layer is provided immediately on top of the long-chain branched polymer layer, or wherein at least a top layer is provided wherein the top layer is the outer layer of the multi-layer coating system i.e. the layer of the coating system located furthest away from the metal substrate.

8. Process according to claim 7 wherein the top layer is a crystallisable polyethylene terephthalate (PET) and/or isophthalic acid copolymerised PET or a polyolefin coating such as a crystallisable polyethylene or polypropylene.

9. Process according to claim 7 or 8 wherein the adhesion layer is a layer of amorphous polymer such as amorphous polyethylene terephthalate (PET), a modified PET, a PET based resin or a modified polyolefin resin having a functional group derived from carboxylic acid.

10. Process according to any one of the preceding claims wherein the polymer film is biaxially stretched between the extrusion of the polymer film and the lamination of the polymer film.

11. Process according to any one of the preceding claims wherein the at least one polymer layer consists of a blend of long-chain branched polyethylene terephthalate or copolymers thereof, and polyethylene or polypropylene or copolymers thereof, or polyethylene terephthalate, polybutylene terephthalate or copolymers thereof.

12. Low carbon steel substrate having a thickness of between 0.10 and 0.30 mm and a carbon content of between 0.002 and 0.1% provided with a polymer film according to any one of claims 1 to 11.

13. Substrate according to claim 12 provided with at least one further long-chain branched polymer layer, preferably selected from the group of long-chain branched polymer layers comprising or consisting of long-chain branched polyethylene terephthalate or copolymers thereof; long-chain branched polypropylene or copolymers thereof; long-chain branched polyamide or copolymers thereof; long-chain branched polyethylene or copolymers thereof.

14. A can or container, having an inside surface for touching a packaged product, and an outside surface, wherein the packaging is produced from a metal substrate according to any one of claims 12 to 13, such that a coating is provided comprising or consisting of the long-chain branched polymer layer, or the at least one polymer layer consisting of a blend, onto the inside surface and/or onto the outside surface.

15. Packaging according to claim 14, wherein the packaging is shaped to form a shaped can and/or embossed can.

**Patentansprüche**

1. Verfahren zur Herstellung eines polymerbeschichteten Substrats aus kohlenstoffarmem Stahl mit einer Dicke zwischen 0,10 und 0,30 mm und einem Kohlenstoffgehalt zwischen 0,002 und 0,1% zur Herstellung von Dosen oder Behältern, bei dem man

    o das Stahlsubstrat bereitstellt;
    o durch Extrusion zu einem Extrudat einen Polymerfilm bereitstellt;
    o den Film auf geeignete Abmessungen für die Laminierung bringt;
    o gegebenenfalls eine Haftschicht zur Verbesserung der Haftung zwischen dem Film und dem Metallsubstrat bereitstellt;
    o den Film auf das Metallsubstrat auflaminiert;
    o wobei der Film:

        - mindestens eine Schicht aus langkettenverzweigtem (LCB) Polymer, die aus langkettenverzweigtem Polyethylenterephthalat oder Copolymeren davon besteht, oder
        - mindestens eine Polymerschicht, die aus einer Mischung von

        - langkettenverzweigtem Polyethylenterephthalat oder Copolymeren davon und
        - einem Polyester vom linearen Typ oder einem Polyolefin, wie. Polyethylen oder Polypropylen oder Copolymeren davon, oder Polyethylenterephthalat, Polybutylenterephthalat oder Copolymeren davon besteht,
        umfaßt;

    o wobei die Schicht aus langkettenverzweigtem Polymer bzw. die Polymerschicht einen Wert der Scherentzähungswirkung $\eta^*_{0,1}/\eta^*_{10}$ von mindestens 3,0 bei einer Verarbeitungstemperatur zwischen 270 und 290°C aufweist.

2. Verfahren nach Anspruch 1, bei dem man das Extrudat vor der Laminierung verstreckt, wobei sich der Betrag der Verstreckung zwischen der Extrusion des Polymerfilms und der Laminierung des Polymerfilms mindestens auf das 2fache und/oder höchstens das 10fache beläuft.

3. Verfahren nach einem der vorhergehenden Ansprüche, bei dem die Schicht aus langkettenverzweigtem Polymer einen Wert der Scherentzähungswirkung $\eta^*_{0,1}/\eta^*_{10}$ von höchstens 10 bei einer Verarbeitungstemperatur zwischen 270 und 290°C aufweist.

4. Verfahren nach einem der vorhergehenden Ansprüche, bei dem die Schicht aus langkettenverzweigtem Polymer einen Wert der Scherentzähungswirkung $\eta^*_{0,1}/\eta^*_{10}$ von höchstens 6,0 bei einer Verarbeitungstemperatur zwischen 270 und 290°C aufweist.

5. Verfahren nach einem der vorhergehenden Ansprüche, bei dem die Schicht aus langkettenverzweigtem Polymer einen Schmelzespannungswert von mindestens 5 cN bei einer Ziehgeschwindigkeit von 200 mm/s aufweist.

6. Verfahren nach einem der vorhergehenden Ansprüche, bei dem es sich bei der Schicht aus langkettenverzweigtem Polymer um eine der Schichten eines mehrschichtigen Beschichtungssystems handelt.

7. Verfahren nach einem der vorhergehenden Ansprüche, bei dem zwischen der Schicht aus langkettenverzweigtem Polymer und dem Metallsubstrat mindestens eine Haftschicht vorliegt oder mindestens eine Deckschicht unmittelbar auf der Schicht aus langkettenverzweigtem Polymer bereitgestellt wird oder mindestens eine Deckschicht bereitgestellt wird, wobei es sich bei der Deckschicht um die äußere Schicht des mehrschichtigen Beschichtungssystems, d.h. die Schicht des Beschichtungssystems, die am weitesten von dem Metallsubstrat entfernt ist, handelt.

8. Verfahren nach Anspruch 7, bei dem es sich bei der Deckschicht um ein kristallisierbares Polyethylenterephthalat (PET) und/oder mit Isophthalsäure copolymerisiertes PET oder eine Polyolefinbeschichtung wie ein kristallisierbares Polyethylen oder Polypropylen handelt.

9. Verfahren nach Anspruch 7 oder 8, bei dem es sich bei der Haftschicht um eine Schicht aus amorphem Polymer wie amorphem Polyethylenterephthalat (PET), einem modifizierten PET, einem auf PET basierenden Harz oder einem modifizierten Polyolefinharz mit einer von Carbonsäure abgeleiteten funktionellen Gruppe handelt.

10. Verfahren nach einem der vorhergehenden Ansprüche, bei dem man den Polymerfilm zwischen der Extrusion des Polymerfilms und der Laminierung des Polymerfilms biaxial verstreckt.

11. Verfahren nach einem der vorhergehenden Ansprüche, bei dem die mindestens eine Polymerschicht aus einer Mischung von langkettenverzweigtem Polyethylenterephthalat oder Copolymeren davon und Polyethylen oder Polypropylen oder Copolymeren davon oder Polyethylenterephthalat, Polybutylenterephthalat oder Copolymeren davon besteht.

12. Substrat aus kohlenstoffarmem Stahl mit einer Dicke zwischen 0,10 und 0,30 mm und einem Kohlenstoffgehalt zwischen 0,002 und 0,1%, das mit einer Polymerfolie nach einem der Ansprüche 1 bis 11 versehen ist.

13. Substrat nach Anspruch 12, das mit mindestens einer weiteren Schicht aus langkettenverzweigtem Polymer, vorzugsweise ausgewählt aus der Gruppe von Schichten aus langkettenverzweigtem Polymer, die langkettenverzweigtes Polyethylenterephthalat oder Copolymere davon, langkettenverzweigtes Polypropylen oder Copolymere davon, langkettenverzweigtes Polyamid oder Copolymere davon, langkettenverzweigtes Polyethylen oder Copolymere davon umfassen oder daraus bestehen, versehen ist.

14. Dose oder Behälter mit einer inneren Oberfläche zum Berühren eines verpackten Produkts und einer äußeren Oberfläche, wobei die Verpackung aus einem Metallsubstrat nach einem der Ansprüche 12 bis 13 so hergestellt wird, daß auf der inneren Oberfläche und/oder der äußeren Oberfläche eine Beschichtung, die die Schicht aus langkettenverzweigtem Polymer bzw. die mindestens eine aus einer Mischung bestehende Polymerschicht umfaßt oder daraus besteht, bereitgestellt wird.

15. Verpackung nach Anspruch 14, wobei die Verpackung zu einer geformten Dose und/oder einer geprägten Dose geformt ist.

## Revendications

1. Procédé de fabrication d'un substrat en acier à faible teneur en carbone revêtu de polymère ayant une épaisseur comprise entre 0,10 et 0,30 mm et une teneur en carbone comprise entre 0,002 et 0,1 % pour la fabrication de canettes et de contenants, comprenant les étapes suivantes :

   - la mise à disposition du substrat en acier ;
   - la mise à disposition d'un film polymère par extrusion pour former un extrudat ;
   - la transformation du film en des dimensions appropriées pour le laminage ;
   - éventuellement la mise à disposition d'une couche adhésive pour améliorer l'adhésion entre le film et le substrat métallique ;
   - le laminage du film sur le substrat métallique ;
   - le film comprenant :

      - au moins une couche d'un polymère ramifié à chaînes longues (LCB) constitué par un polyéthylène téréphtalate ramifié à chaînes longues ou ses copolymères, ou
      - au moins une couche polymère constituée par un mélange de
      - polyéthylène téréphtalate ramifié à chaînes longues ou ses copolymères, et
      - un polyester de type linéaire, ou une polyoléfine, telle que le polyéthylène ou le polypropylène ou leurs copolymères, ou le polyéthylène téréphtalate, le polybutylène téréphtalate ou leurs copolymères,
      - la couche de polymère ramifié à chaînes longues ou la couche polymère ayant une valeur de l'effet de dilution par cisaillement $\eta^*_{0,1}/\eta^*_{10}$ d'au moins 3,0 à une température de traitement comprise entre 270 et 290 °C.

2. Procédé selon la revendication 1, dans lequel l'extrudat est étiré avant l'étape de laminage, la quantité d'étirement entre l'extrusion du film polymère et le laminage du film polymère étant d'au moins 2 fois et/ou d'au plus 10 fois.

3. Procédé selon l'une quelconque des revendications précédentes, dans lequel la couche de polymère ramifié à chaînes longues a une valeur de l'effet de dilution par cisaillement $\eta^*_{0,1}/\eta^*_{10}$ d'au plus 10 à une température de traitement comprise entre 270 et 290 °C.

**4.** Procédé selon l'une quelconque des revendications précédentes, dans lequel la couche de polymère ramifié à chaînes longues a une valeur de l'effet de dilution par cisaillement $\eta^*_{0,1}/\eta^*_{10}$ d'au plus 6,0 à une température de traitement comprise entre 270 et 290 °C.

**5.** Procédé selon l'une quelconque des revendications précédentes, dans lequel la couche de polymère ramifié à chaînes longues a une valeur de tension à l'état fondu d'au moins 5 cN à une vitesse d'étirement de 200 mm/s.

**6.** Procédé selon l'une quelconque des revendications précédentes, dans lequel la couche de polymère ramifié à chaînes longues est une des couches d'un système de revêtement multicouche.

**7.** Procédé selon l'une quelconque des revendications précédentes, dans lequel au moins une couche adhésive est présente entre la couche de polymère ramifié à chaînes longues et le substrat métallique, ou dans lequel au moins une couche supérieure est prévue immédiatement au-dessus de la couche de polymère ramifié à chaînes longues, ou dans lequel au moins une couche supérieure est prévue, la couche supérieure étant la couche extérieure du système de revêtement multicouche, c.-à-d. la couche du système de revêtement située le plus loin du substrat métallique.

**8.** Procédé selon la revendication 7, dans lequel la couche supérieure est un revêtement de polyéthylène téréphtalate (PET) cristallisable et/ou de PET copolymérisé avec de l'acide isophtalique ou d'une polyoléfine telle qu'un polyéthylène ou polypropylène cristallisable.

**9.** Procédé selon la revendication 7 ou 8, dans lequel la couche adhésive est une couche d'un polymère amorphe tel que le polyéthylène téréphtalate (PET) amorphe, un PET modifié, une résine à base de PET ou une résine de polyoléfine modifiée contenant un groupe fonctionnel dérivé d'un acide carboxylique.

**10.** Procédé selon l'une quelconque des revendications précédentes, dans lequel le film polymère est étiré biaxialement entre l'extrusion du film polymère et le laminage du film polymère.

**11.** Procédé selon l'une quelconque des revendications précédentes, dans lequel la ou les couches polymères sont constituées par un mélange de polyéthylène téréphtalate ramifié à chaînes longues ou ses copolymères, et de polyéthylène ou polypropylène ou leurs copolymères, ou de polyéthylène téréphtalate, de polybutylène téréphtalate ou leurs copolymères.

**12.** Substrat en acier à faible teneur en carbone ayant une épaisseur comprise entre 0,10 et 0,30 mm et une teneur en carbone comprise entre 0,002 et 0,1 %, muni d'un film polymère selon l'une quelconque des revendications 1 à 11.

**13.** Substrat selon la revendication 12, muni d'au moins une couche supplémentaire d'un polymère ramifié à chaînes longues, de préférence choisie dans le groupe constitué par les couches de polymère ramifié à chaînes longues comprenant ou constituées par le polyéthylène téréphtalate ramifié à chaînes longues ou ses copolymères ; le polypropylène ramifié à chaînes longues ou ses copolymères ; le polyamide ramifié à chaînes longues ou ses copolymères ; le polyéthylène ramifié à chaînes longues ou ses copolymères.

**14.** Canette ou contenant, ayant une surface intérieure destinée à toucher un produit emballé et une surface extérieure, l'emballage étant fabriqué à partir d'un substrat métallique selon l'une quelconque des revendications 12 à 13, de manière à ce qu'un revêtement, comprenant ou constitué par la couche de polymère ramifié à chaînes longues, ou la ou les couches polymères constituées par un mélange, soit mis en place sur la surface intérieure et/ou sur la surface extérieure.

**15.** Emballage selon la revendication 14, dans lequel l'emballage est façonné pour former une canette façonnée et/ou une canette estampée.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1449884 A1
- EP 1095767 A

- US 5407702 A